Europäisches Patentamt

European Patent Office

Office européen des brevets

(11) Publication number: **0 208 343**
**A2**

(12) **EUROPEAN PATENT APPLICATION**

(21) Application number: **86200515.4**

(22) Date of filing: **26.03.86**

(51) Int. Cl.⁴: **C 03 B 8/00**
**C 03 C 3/04**

(30) Priority: **05.07.85 US 752052**

(43) Date of publication of application:
**14.01.87 Bulletin 87/3**

(84) Designated Contracting States:
**BE DE FR GB IT NL**

(71) Applicant: **Bell Communications Research, Inc.**
**290 West Mt. Pleasant Avenue**
**Livingston New Jersey 07039-2729(US)**

(72) Inventor: **Bagley, Brian G.**
**467 Ridge Road**
**Watchung New Jersey 07060(US)**

(72) Inventor: **Quinn, William Erik**
**344 Beechwood Avenue**
**Middlesex, NJ 08846(US)**

(74) Representative: **Lips, Hendrik Jan George, Ir. et al,**
**HAAGSCH OCTROOIBUREAU Breitnerlaan 146**
**NL-2596 HG Den Haag(NL)**

(54) **Method for preparation of silicate glasses of controlled index of refraction and optical device including same.**

(57) A method for the preparation of silicate glasses of controlled index of refraction involves the thermal and/or plasma processing of organo-silicon polymers. Compositions so treated evidence a suppressed index of refraction which may subsequently be increased by sintering to yield a material uniquely suited for use in fiber optic devices.

FIG. 1

**0208343**

Method for preparation of silicate glasses of controlled
index of refraction and optical device including same.

This invention relates to a method for the thermal and/or
plasma decomposition of organo-silicon polymers. More
specifically, the present invention relates to a method
for the preparation of a material of controlled index
of refraction by the thermal and/or plasma processing
of an organo-silicon polymer and to a device including
such material.

Background of the Invention

During the past decade, there has been widespread interest
in a class of materials evidencing optical properties
suitable for use in fiber optic and integrated optic
technology. Among the most prominent of such materials
has been silicon dioxide, a composition known for its
ability to successfully guide light. Unfortunately,
workers in the art have encountered a modicum of difficulty
in guiding light through this material because of the
absence of convenient claddings which must evidence
indices of refraction below that of the core material
namely, pure bulk silicon dioxide. Heretofore, efforts
to overcome this limitation have focused upon the use
of fluorine or boron doped claddings or the use of an
organic coating on the surface of the silicon dioxide.
Unfortunately, the doping effort proved costly and
yielded only minor changes in the index of refraction.
In marked contrast, the organic coating was able to effect
large changes in refractive index but proved to be
thermally unstable.

Summary of the Invention

In accordance with the present invention these prior art
limitations are effectively obviated by a novel technique
which permits accurate control of the refractive index
of a silicon dioxide based material over a broad range.
Specifically, we have found that the index of refraction of this material can be varied substantially by the thermal and/or plasma processing of an organo-silicon polymer from a value of approximately 1.38 up to values that exceed that of silicon dioxide (1.454). This behavior is initially attributed to the presence of a fenestrated void structure comprising voids of from 10-100 $\overset{o}{A}$ which are homogeneously distributed. A subsequent sintering heat treatment of the material causes an increase in the index of refraction up to a value approximating that of bulk fused silicon (1.454), facilitating its use as a cladding material for pure silicon dioxide. The desired index depression can be accurately controlled by the thermal and/or plasma processing.

We have also found that the index of refraction of fused silicon dioxide may also be adjusted by preparing alloy glasses, namely, alloys of silicon dioxide with phosphorous, boron or germanium, and subsequently heating the resultant alloys at moderate temperatures to adjust the index of refraction to the desired level.

Brief Description of the Drawing

The invention will be more readily understood by reference to the following detailed description taken in conjunction with the accompanying drawing wherein:

    Fig. 1 is a front elevational view of a fiber coupler in accordance with the present invention, and

    Fig. 2 is a front elevational view of a fiber tap in accordance with the invention.

Detailed Description

In the operation of the process, a suitable source of silicon dioxide is selected from conventional commercially available materials. Typical of such materials are the organosilsesquioxane polymers prepared by the hydrolysis and condensation polymerization of methyltriethoxysilane. These compositions are $SiO_2$ precursors evidencing low temperature ceramic processing advantages and are thermoset organo-silicon polymers that cure to form hard glassy films.

We have found that the cured organo-silicon films can be converted to silicate glasses by both thermal and plasma processes. Application of the material may be effected by spinning, dipping, spraying, painting, etc.

In a process implementing our invention, the organo-silicon polymer is first dissolved in a suitable organic solvent such as ethyl alcohol, butyl alcohol, ethyl acetate, and the like. The concentration of polymer in solution may range from 1-80 per cent based upon the technique chosen for application. Thus, for example, for spinning purposes a typical solution might comprise 10 per cent, by weight, organo-silicon polymer in ethyl alcohol. The polymer readily dissolves in the organic solvents in the absence of heat with a minimum level of stirring.

In a typical spinning process, the solution is spun onto a substrate using a commercial photoresist spinner, the thickness of the film being determined by considerations pertaining to soluite concentration and spin speed. Thus, for example, a 10 % solution spun 2000 rpm for 20 seconds yields a thickness of approximately 4000 $\overset{o}{A}$.

Next in this embodiment, the spun film is air dried for a time period of at least 5 minutes and baked thermally at a temperature ranging from 200-250°C for approximately 30 minutes. This baking step effects curing of the film, that is, it results in crosslinking or joining of all the polymer chains. At this juncture, the resultant film is not soluble in the solvent from which it was spun and cannot be scratched by a number 2 pencil. Additional heat treatment at higher temperatures is accompanied by a loss of the organic components of the polymer, densification of the film and an increase in refractive index. At temperatures within the range of 450-700°C, the organic component is completely removed and the film continues to sinter. At temperatures ranging from 1000 to 1100°C the film is dense and evidences the refractive index of fused quartz.

In an alternative embodiment, an oxygen or air plasma may be employed as a substitute for the pyrolytic (thermal) decomposition at 450-700°C. This end may typically be effected in a conventional barrel reactor at room temperature using a 13.56 megahertz plasma with air or oxygen. The duration of treatment is dependent upon the thickness of the material but 15 minutes is found to be adequate to effect the desired purpose. In the event water is produced as a by-product of this process, heating to about 250°C may be employed to remove the moisture.

The resin prepared in accordance with the foregoing procedure may conveniently be applied to optical fibers as either a protective coating or as a wave guiding cladding. This end may be attained by preparing a viscous solution of the described resin and applying it with a fiber coating cup. The solution may be placed in the coating cup that is normally employed for the protective jacket. Then, the fiber, a silica core, is drawn, run through the coating cup, through a tube furnace to cure the coating and finally spooled. Curing may be conveniently effected at 400°C in a short tube furnace.

Alternatively phospho, germano and boro-silicate glasses may be prepared by adding a suitable boron, germanium or phosphorous source to the organo-silicon polymer solution. Thus, for example, phospho-silicate glasses can be made by mixing an appropriate phosphorous source with the organo-silicon polymer and processing the mixture as described previously. Phosphorous sources suitable for this purpose include those soluble in the organo-silicon polymer solution, those capable of reacting with the functional groups (hydroxy and ethoxy) of the polymer, those which do not volatilize prior to reaction, and those which do not cause rapid gelling of the solution when admixed therewith. Typical sources meeting this requirement are phenyl phosphinic acid, phenyl phosphonic acid and $H_3PO_4$ (phosphoric acid), each of which is soluble in ethanol and ethyl acetate.

In this embodiment of our invention, we have found that the phospho-silicates may be prepared with Si-P ratios ranging from greater than 30:1 to 1:1. A typical 10:1 Si:P glass may be prepared as follows:

A stock solution containing 10 per cent, by weight, organosilsesquioxane is chosen as the source of the silica. The solution contained 1.36 moles of silicon per kilogram of solution (1.36 molal). The silicon resin, based on gravimetric measurements in air revealed that the resin was 82 % $SiO_2$. During the measurement, the resin oxidized from $SiO_{1.5}$ to $SiO_2$. Following, a 1.36 molal stock solution of phosphoric acid was added to the resin solution in the desired ratio and the mixture spun onto a substrate, air dried and baked in the manner described above. It is noted that baking of the film serves only to cure the material and remove cure products and does not effect removal of any of the organic side groups. These resulting films are then stable to 300°C with a depressed index suitable for guiding light in $SiO_2$. Alteration in refractive index is implemented by removal of organic components from the polymer which results in voids in the matrix. These voids cause a depressed refractive index because the index of air or a vacuum is lower than that for the phospho-silicate. Subsequent sintering of the porous matrix serves to remove the voids and elevate the refractive index to a desired level. We have determined that at temperatures less than 500°C for thirty minutes the refractive index is only dependent on temperature to a limited extent. At temperatures in excess of 500°C the sintering mechanism obtains and the index increases with increasing temperature until at 1000°C at thirty minutes the index exceeds that of fused silica. Thus, in this case, the index can be controlled.

It will be appreciated that boro-silicate glasses can be prepared in the same manner as the phospho-silicates. Thus, for example, a boron oxide in ethanol solution may be added in a 1:10 ratio to the organo-silicon resin (1.36 molal) solution to obtain a 10:1 Si-B ratio and applied and baked as described previously. In this case, however, the index of refraction of a bulk boro-silicate is close to that of bulk (fully densified) silicon dioxide. Consequently, only depressed index materials are obtained in this manner. However, an advantage observed lies in the enhancement of sintering kinetics.

The germano-silicate glasses may not be prepared in a manner similar to the phospho-silicates because the germanium ethoxide solution employed rapidly gels the organo-silicon solution. The germanium ethoxyde solution is applied on top of the cured organo-silicon film. The solution fills the voids in the porous network and the germanium ethoxide reacts with the organo-silicon polymer to form a stable film. This film may then be processed, as described above, to control the index of refraction.

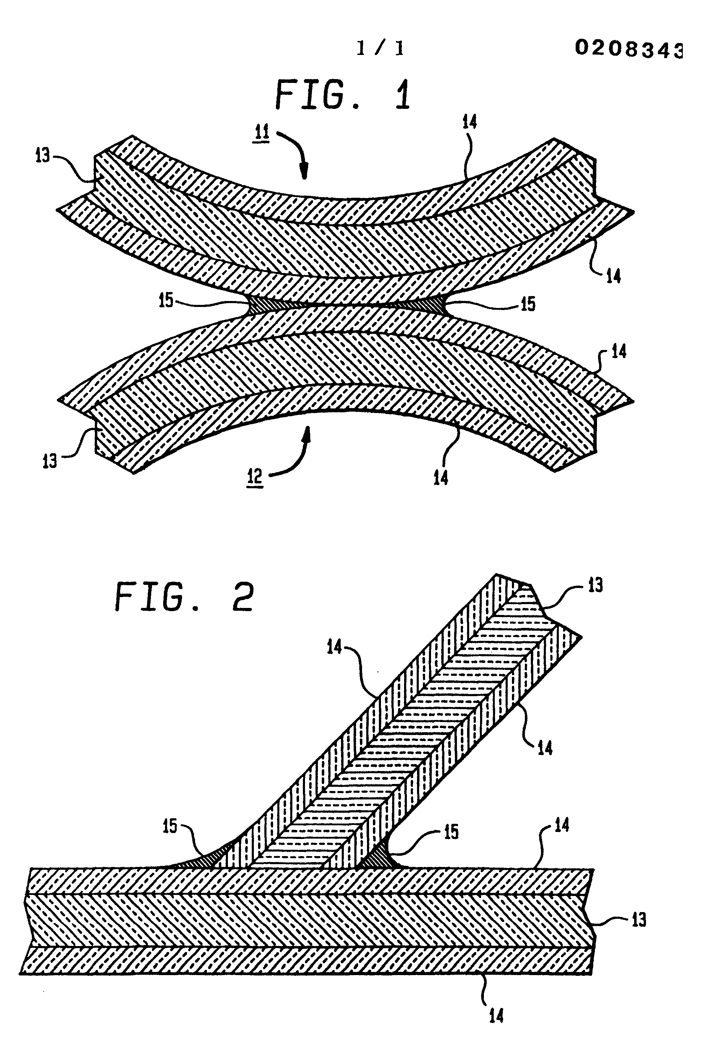

With reference now more particularly to Fig. 1, there is shown, in front elevational view a cross-section of a typical fiber coupler in which the materials described herein may be employed. Shown in the drawing are fibers 11 and 12 including an $SiO_2$ core 13 and a cladding 14 comprising the cured organo-silsesquioxane described herein. The refractive index of the claddings are altered locally and made equal to each other by pyrolytic decomposition possibly combined with exposure to an air/oxygen plasma in a barrel reactor at the point where the claddings of the fibers touch following which an organic coating 15 is painted upon the treated area. This structure permits light to be guided in a different direction, light being leaked at those points where the refractive index has been altered. A variation of this concept is depicted in fig. 2 wherein a fiber tap is shown which permits a signal to be split off from a given main cable.

While the invention has been described in detail in the foregoing specification, the aforesaid is by way of illustration only and is not restrictive in character. It will be appreciated by those skilled in the art that

0208343

the processing parameters may be varied without departing from the spirit of the invention. Modifications which will readily suggest themselves to persons skilled in the art are all considered within the scope of the invention, reference being had to the appended claims.

0208343

C l a i m s
_____

1. Method for the preparation of a silicate glass of
controlled index of refraction
characterized by
the steps of
a) curing an organo-silicon thermosetting resin,
b) treating said cured polymer to cause the formation
of a fenestrated $SiO_2$ void structure having a lowered
index of refraction below that of bulk fused silica, and
c) heating said structure to effect a densification by
sintering thereby resulting in the elevation of the
refractive index to a desired value ranging up to the
refractive index of bulk fused silica, when the glass
comprises pure $SiO_2$, and a value exceeding the refractive index of bulk fused silica when the glass is an
alloy of silicon dioxide with phosphorus, boron or
germanium.

2. Method in accordance with claim 1,
characterized in
that said cured polymer is treated by pyrolytic
decomposition.

3. Method in accordance with claim 1,
characterized in
that said cured polymer is treated by exposure to an
oxygen or air plasma in a barrel reactor at room
temperature.

4. Method in accordance with claim 1,
characterized in
that curing of said resin is effected at a temperature
within the range of 200-400$^{o}$C for a time period within
the range of 1-30 minutes and wherein said heating
is effected at a temperature within the range of
600-1100$^{o}$C for a time period within the range of
1-60 minutes to effect a change in the refractive
index.

0208343

5. Method in accordance with claim 2,
characterized in
that said pyrolytic decomposition is effected at a
temperature ranging from 450 to 700$^{\circ}$C, thereby
resulting in a structure having an index of refraction
ranging down to 1.38.

6. Method in accordance with claim 5,
characterized in
that said resin contains a phosphorus or boron source,
said curing is effected at a temperature within the
range of 200 to 250$^{\circ}$C, and said sintering is effected
at a temperature within the range of 500 to 1000$^{\circ}$C.

7. Method in accordance with claim 6,
characterized in
that said source is phenylphosphinic acid.

8. Method in accordance with claim 6,
characterized in
that said source is phenylphosphonic acid.

9. Method in accordance with claim 6,
characterized in
that said source is phosphoric acid.

10. Method in accordance with claim 6,
characterized in
that the ratio of silicon to phosphorus ranges from
30:1 to 1:1.

11. Method in accordance with claim 6,
characterized in
that said source is boron oxide.

12. Method in accordance with claim 3,
characterized in
that said resin contains a phosphorus or boron source,
said curing is effected at a temperature within the
range of 200 to 250$^{\circ}$C, and said sintering is effected at a temperature within the range of 500 to 1000$^{\circ}$C.

13. Method in accordance with claim 1,
characterized by
the steps of
a) curing the organo-silicon resin upon a suitable
substrate at a temperature ranging from 200-250$^{\circ}$C
for 30 minutes,
b) depositing a layer of a germanium ethoxide solution
in ethanol upon said cured film, heat treating the
film at 200-250$^{\circ}$C for 30 minutes and than exposing
the resultant structure to an air or oxygen plasma
in a barrel reactor at room temperature, thereby
resulting in the formation of a germanosilicate
glass with a fenestrated structure having an index
of refraction ranging down to 1.38, and
c) sintering said structure at a temperature within
the range of 500-1000$^{\circ}$C to effect an increase in the
refractive index to a desired value ranging up to
a value which exceeds the refractive index of bulk
fused silicate.

14. Method in accordance with claim 1,
characterized by
the steps of
a) curing the organo-silicon resin upon a suitable
substrate at a temperature ranging from 200-250$^{\circ}$C
for thirty minutes,
b) depositing a layer of a germanium ethoxide
solution in ethanol upon said cured film, heat treating
the film at 200-250$^{\circ}$C for thirty minutes and then
pyrolytically decomposing the resultant structure at
a temperature ranging from 450-700$^{\circ}$C thereby resulting
in the formation of a germanosilicate glass with a
fenestrated structure having an index of refraction
ranging down to 1.38, and
c) sintering said structure at a temperature within
the range of 500 to 1000$^{\circ}$C to effect an increase
in the refractive index to a desired value ranging
up to a value which exceeds the refractive index of

- 4 -

0208343

bulk fused silica.

15. Method according to claim 2,
characterized in
that said resin is in the form of a coating on a
silicon core fiber and is cured in a tube furnace
at a temperature ranging from 200 to 400$^O$C, and the
pyrolytic decomposition is effected at a temperature
ranging from 450 to 700$^O$C.

16. Method according to claim 3,
characterized in
that said resin is in the form of a coating on a
silicon core fiber and is cured in a tube furnace
at a temperature ranging from 200 to 400$^O$C.

17. Method in accordance with any one of claims 1, 15 and
16,
characterized in
that said resin is an organo-silesquioxane.

18. Optical device including at least two optical fibers
fused to each other at a common point, said fibers
characterized by
an $SiO_2$ core surrounded by a silicate glass cladding
prepared in accordance with any one of claims 1, 12,
13 and 14.

19. Fiber coupler in accordance with claim 18.

20. Fiber tap in accordance with claim 18.

-----

# FIG. 1

# FIG. 2